# EUROPÄISCHE PATENTANMELDUNG

(11) **EP 1 772 476 A1**
(43) Veröffentlichungstag der Anmeldung: **11.04.2007**
(21) Anmeldenummer: 06121166.0
(22) Anmeldetag: 25.09.2006
(51) Int. Cl.: C08G 77/16, C08G 77/18, C08G 77/06

(54) **Flüssige Organopolysiloxane**

(30) Priorität: 04.10.2005 DE 102005047396
(71) Anmelder: Wacker Chemie AG, 81737 München (DE)
(72) Erfinder: Ackermann, Hartmut, 84489, Burghausen (DE)
(74) Vertreter: Budczinski, Angelika

(57) **Zusammenfassung**

Die Erfindung betrifft flüssige Organopolysiloxane aus Einheiten der allgemeinen Formel

RₐX_{b}SiO_{(4-a-b)/2}

wobei
R, X, a und b die in Anspruch 1 angegebenen Bedeutungen haben, mit der Maßgabe, dass die Summe a+b ≤ 3 ist, in mindestens 50 % der Einheiten des Organopolysiloxans a gleich 1 ist und die Organopolysiloxane bei 20°C und einem Druck von 900 bis 1100 hPa flüssig sind.

## Beschreibung

Die Erfindung betrifft flüssige Organopolysiloxane, Verfahren zu deren Herstellung sowie deren Verwendung.

Siliconharze sind im Allgemeinen bei Raumtemperatur fest oder hochviskos, was eine direkte Applikation für die Endanwendung daher in den meisten Fällen nicht ermöglicht.
In DE 195 17 346 A wird eine Siloxanemulsion als Applikationsform beschrieben. Nachteilig ist die Anwesenheit von zum Teil nicht unerheblichen Mengen an Emulgator, die nicht bei allen Anwendungen gewünscht und tolerierbar sind. So können bei Beschichtungen beispielsweise Haftungseinbußen auftreten. Bei der Applikation auf Kunststoffen werden durch die Wahl der Emulgatoren anwendungstechnisch gewünschte Eigenschaften, wie Hydrophobie, negativ beeinflusst, teilweise sogar dezimiert. Instabilitäten von Emulsionen im Allgemeinen stellen sich ebenfalls nachteilig heraus. Auch kann Wasser als Lösemittel für z.B. korrosionsempfindliche Substrate nicht geeignet sein.

In DE 41 28 893 A werden als Applikationsformen neben Emulsion noch Dispersion und Lösung beschrieben. Nachteilig an Dispersionen ist die nicht reproduzierbare Einstellung der Dispersion und dessen Absetzverhalten. Lösungen allgemein liefern keine Nachteile bezüglich Instabilität der Applizierform. Die Verwendung organischer Lösungsmittel bietet den Vorteil der guten Verdünnbarkeit in Kombination mit einer guten Handhabbarkeit. Die Auswahl der Lösungsmittel wird jedoch durch umweltrelevante und toxikologische Anforderungsprofile stark eingeschränkt. Ferner handelt es sich bei organischen Lösungsmitteln um siliconfremde Stoffe, die die Verträglichkeit empfindlich stören können.

Im Rahmen der vorliegenden Erfindung sollen von dem Begriff Organopolysiloxane sowohl polymere, oligomere wie auch dimere Siloxane mitumfasst werden.

Gegenstand der Erfindung sind Organopolysiloxane aus Einheiten der allgemeinen Formel

RₐX_{b}SiO_{(4-a-b)/2} (I),

wobei
R gleich oder verschieden sein kann und einwertige, SiC-gebundene, gegebenenfalls substituierte Kohlenwasserstoffreste bedeutet,
X gleich oder verschieden sein kann und Halogenatom oder einen Rest -OR¹ bedeutet mit R¹ gleich Wasserstoffatom oder gegebenenfalls substituierten Kohlenwasserstoffrest,
a 0, 1, 2 oder 3 ist und
b 0, 1, 2 oder 3 ist,
mit der Maßgabe, dass die Summe a+b ≤ 3 ist, in mindestens 50 % der Einheiten des Organopolysiloxans a gleich 1 ist und die Organopolysiloxane bei 20°C und einem Druck von 900 bis 1100 hPa flüssig sind.

Beispiele für Rest R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der α- und der β-Phenylethylrest.

Beispiele für substituierte Reste R sind alle für R oben genannten Reste, die vorzugsweise mit Mercaptogruppen, epoxyfunktionellen Gruppen, Carboxygruppen, Ketogruppen, Enamingruppen, Aminogruppen, Aminoethylaminogruppen, iso-Cyanatogruppen, Aryloxygruppen, Acryloxygruppen, Methacryloxygruppen, Hydroxygruppen und Halogengruppen substituiert sein können.

Bevorzugt handelt es sich bei Rest R um Kohlenwasserstoffreste mit 1 bis 18 Kohlenstoffatomen, besonders bevorzugt um Kohlenwasserstoffreste mit 1 bis 12 Kohlenstoffatomen, insbesondere um den Methyl-, den Phenyl- und den i-Octylrest.

Beispiele für R¹ sind die für Rest R angegebenen Beispiele.

Bevorzugt handelt es sich bei Rest R¹ um Kohlenwasserstoffreste mit 1 bis 6 Kohlenstoffatomen, besonders bevorzugt um Kohlenwasserstoffreste mit 1 bis 3 Kohlenstoffatomen, insbesondere um Methoxy- und Ethoxyreste.

Beispiele für Rest X sind Halogenatome, wie Chlor, Brom und Fluor, sowie der Hydroxy-, Methoxy-, Ethoxy-, n-Propoxy-, iso-Propoxy-, 1-n-Butoxy-, 2-n-Butoxy-, iso-Butoxy-, tert.-Butoxy-, n-Pentoxy-, iso-Pentoxy-, neo-Pentoxy-, tert.-Pentoxy- und n-Hexoxyreste.

Bevorzugt handelt es sich bei Rest X um Reste -OR¹ mit R¹ gleich der genannten Bedeutung, besonders bevorzugt um den Rest -OH, -OCH₃ und -OCH₂CH₃.

Falls Rest X die Bedeutung von Halogenatom hat, ist Chloratom bevorzugt.

Bevorzugt hat a die Bedeutung von 1, 2 oder 3, besonders bevorzugt 1.

Bevorzugt hat b die Bedeutung von 0, 1 oder 2.

In den erfindungsgemäßen Organopolysiloxanen sind bevorzugt mindestens 60 % aller Einheiten der Formel (I) solche mit b gleich 0, besonders bevorzugt mindestens 70 %.

Bevorzugt handelt es sich bei den erfindungsgemäßen Organopolysiloxanharzen um solche, in denen in mindestens 55 % aller Einheiten der Formel (I) a gleich 1 ist.

Besonders bevorzugt handelt es sich bei den erfindungsgemäßen Organopolysiloxanharzen um solche, in denen in mindestens 60 % aller Einheiten der Formel (I) a gleich 1 ist und in maximal 30 % aller Einheiten der Formel (I) a gleich 2 oder 3 ist.

Insbesondere handelt es sich bei den erfindungsgemäßen Organopolysiloxanharzen um solche, in denen in mindestens 65 % aller Einheiten der Formel (I) a gleich 1 ist und in maximal 25 % aller Einheiten der Formel (I) a gleich 2 oder 3 ist.

Bevorzugt handelt es sich bei den erfindungsgemäßen Organopolysiloxanen um solche der Formel [RSiO_{3/2}]_{g}[R₂SiO]ₕ[R₃SiO_{1/2}]_{c}[SiO_{4/2}]_{d}[R¹O_{1/2}]ₑ[HO_{1/2}]_{f} mit R gleich Methylrest, Isooctylrest, R¹ gleich Methyl-, Ethyl- oder Butylrest und g=2-200, h=0-100, c=0-50, d=0-100, e=0-20, f=0-10.

Beispiele für die erfindungsgemäßen Organopolysiloxanharze sind Harze des Typs:

[OctSiO_{3/2}]_{0,07}[ProSiO_{3/2}]_{0,73}[Octsi(OR²)O_{2/2}]_{0,02}[ProSi(OR²)O_{2/2}]_{0,17} [OctSi(OR²)₂O_{1/2}]_{0,00}[PrOSi(OR²)₂O_{1/2}]0,01,

[NonSiO_{3/2}] _{0,40} [ProSiO_{3/2}]_{0,13}[NonSi(OR²) O_{2/2}]_{0,30}[ProSi(OR²)O_{2/2}]_{0,10} [NonSi(OR²)₂O_{1/2}]_{0,04}[ProSi(OR²)₂O_{1/2}]_{0,03},

[DodecSiO_{3/2}]_{0,16}[ProSiO_{3/2}]_{0,25}[DodecSi(OR²)O_{2/2}]_{0,23} [ProSi(OR²)O_{2/2}]_{0,34}[DodecSi(OR²)₂O_{1/2}]_{0,01}[ProSi(OR²)₂O_{1/2}]_{0,01},

[IOSiO_{3/2}]_{0,40}[EtSiO_{3/2}]_{0,14}[IOSi(OR²)O_{2/2}]_{0,29}[EtSi (OR²)O_{2/2}]_{0,13} [IOSi(OR²)₂O_{1/2}]_{0,03}[EtSi(OR²)₂O_{1/2}]_{0,01}

und

[IOSiO_{3/2}]_{0,16}[MeSiO_{3/2}]_{0,25}[IOSi(OR²)O_{2/2]0,23}[MeSi(OR²)O_{2/2}]_{0,34} [IOSi(OR²)₂O_{1/2}]_{0,01}[MeSi(OR²)₂O_{1/2}]0,01

sowie

[MeSiO_{3/2}]_{13,5}[IOSiO_{3/2}]_{2,1}[Me₂SiO]_{3,3}[Me₃SiO_{1/2}]_{1,6}[MeO_{1/2}]_{1,3} [HO_{1/2}]_{0,2},

[MeSiO_{3/2}]_{20,4}[Me₂SiO]_{2,8}[Me₃SiO_{1/2}]_{2,1}[EtO_{1/2}]_{1,5}[HO_{1/2}]_{0,6}

und

[MeSiO_{3/2}]_{15,3}[Me₂SiO]_{2,8}[Me₃SiO_{1/2}]_{1,3}[EtO_{1/2}]_{1,5}[HO_{1/2}]_{1,0} mit

Me gleich Methylrest, Et gleich Ethylrest, Pro gleich Propylrest, Oct gleich n-Octylrest, IO gleich *iso*-Octylrest, Non gleich Nonylrest, Dodec gleich n-Dodecylrest und R² gleich Wasserstoffatom oder Ethylrest.

Bevorzugt haben die erfindungsgemäßen Organopolysiloxane bei 25°C eine Viskosität von 1 bis 500 000 mm²/s, besonders bevorzugt 1 bis 50 000 mm²/s.

Die erfindungsgemäßen Organopolysiloxane können nach der in der Silicon-Chemie an sich bekannten Verfahren, wie etwa durch Hydrolyse- und Kondensationsreaktionen von Halogensilanen oder auch Alkoxysilanen hergestellt werden.

Bevorzugt werden die erfindungsgemäßen Organopolysiloxane dadurch hergestellt, dass in einem ersten Schritt Chlorsilane mit wässrigen Alkoholen partiell alkoxyliert bzw. hydrolysiert bzw. kondensiert werden und die Reaktionsmischung in einem zweiten Schritt ggf. in Anwesenheit eines wasserunlöslichen organischen Lösungsmittels durch Zugabe von 0,3 bis 10 mol Wasser auf ein mol Siliciumkomponente hydrolysiert bzw. kondensiert wird.

Alternativ können die erfindungsgemäßen Organopolysiloxane aber auch dadurch hergestellt werden, dass Alkoxysilane in ein wässriges Milieu dosiert oder vorgelegt werden, wobei diese nach Zugabe eines geeigneten Katalysators unter Freisetzung von Alkoholen hydrolysieren und anschließend kondensieren. Optional können die so erzeugten Organopolysiloxane einer alkalischen Nachbehandlung unterworfen werden. Besonders bevorzugt werden zur Hydrolyse Methoxy- oder Ethoxysilane eingesetzt.

Die erfindungsgemäßen Organopolysiloxane können für alle Zwecke verwendet werden, für die auch bisher Organopolysiloxane eingesetzt worden sind, wie z.B. im Bautenschutz, im Coating-Bereich, in Kosmetik-Produkten, im Bereich Textil sowie Papier. Insbesondere eignen sie sich zur Herstellung von Emulsionen und als Bindemittel zur Herstellung von Farben und Lacke.

Die erfindungsgemäßen Organopolysiloxane haben den Vorteil, dass sie bei Umgebungsbedingung flüssig, VOC-arm und lagerstabil sind. Darüberhinaus sind die erfindungsgemäßen Organopolysiloxane löslich in organischen Lösungsmitteln und chemisch reaktiv.

Ferner haben die erfindungsgemäßen Organopolysiloxane den Vorteil, dass sie einen hohen Vernetzungsgrad aufweisen und bevorzugt ohne Verdünnung emulgierbar sind.

Des Weiteren haben die erfindungsgemäßen Organopolysiloxane den Vorteil, dass sie klare und farblose Flüssigkeiten darstellen.

Ferner haben die erfindungsgemäßen Organopolysiloxane den Vorteil, dass sie sich hervorragend zur Anwendung in Siliconharzfarben eignen.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

Die im Folgenden aufgeführten mittleren Summenformeln ergeben sich aus der Auswertung des ¹H-, ²⁹Si-NMR und GPC Spektroskopie (gegen Polystyrolstandard gemessen, unter Berücksichtigung des Gewichtsmittels Mw) des jeweiligen Produktes.

### Beispiel 1

In einen Dreihalskolben mit Rührer, Rückflusskühler und Tropftrichter werden 207,8 g eines Chlorsilangemisches aus 187 g Methyltrichlorsilan und 20,8 g Dimethyldichlorsilan vorgelegt und 166,2 g eines Gemisches aus 149,6 g Ethanol und 16,6 g Wasser unter Rühren innerhalb von 10 Minuten zudosiert.

Zur Hydrolyse/Kondensation werden 284,6 g des so erhaltenen Chlorwasserstoff-konzentrierten Reaktionsgemisches mit 14,03 g Trimethylchlorsilan und 334,84 g Toluol versetzt und 56,92 g Wasser innerhalb von 35 Minuten unter guter Durchmischung zudosiert.

Durch Zugabe von 341,5 g Wasser wird die Säurekonzentration auf ein unreaktives Maß reduziert, sodass nach sorgfältiger Durchmischung und anschließendem 30 minütigen Ruhen lassen die toluolische Harzphase von der wässrig/ethanolischen Chlorwasserstoffphase getrennt werden kann, ohne dass weitere Kondensationsschritte stattfinden.

In weiteren Aufarbeitungsschritten wird die toluolische Harzphase mit Natriumbicarbonat neutralisiert, mit Aktivkohle von katalytisch wirksamen Metallspuren befreit und anschließend über Filterhilfsmittel filtriert und am Rotationsverdampfer bei 120-200°C und 30 mbar Vakuum von flüchtigen Bestandteilen befreit, wobei Ethanol und Toluol nach Redestillation wieder dem Herstellprozess rückgeführt werden können.

Es werden 87,8 g eines Siloxans der mittleren Summenformel [MeSiO_{3/2}]_{20,4}[Me₂SiO]_{2,8}[Me₃SiO_{1/2}]_{2,1}[EtO_{1/2}]_{1,5}[HO_{1/2}]_{0,6} als klare und farblose Flüssigkeit mit einer Viskosität von 11500 mPas erhalten, wobei Me gleich Methylrest und Et gleich Ethylrest bedeutet.

### Beispiel 2

In einen Dreihalskolben mit Rührer, Rückflusskühler und Tropftrichter werden 340 g eines Chlorsilangemisches aus 278,8 g Methyltrichlorsilan, 34 g Dimethyldichlorsilan und 27,2 g Isooctyltrichlorsilan vorgelegt und 374 g eines Gemisches aus 344 g Ethanol und 30 g Wasser unter guter Durchmischung innerhalb von 10 Minuten zudosiert.

Zur Hydrolyse/Kondensation werden 599 g des so erhaltenen Chlorwasserstoff-konzentrierten Reaktionsgemisches mit 13,9 g Trimethylchlorsilan und 1200 g Toluol versetzt und 120 g Wasser innerhalb von 35 Minuten unter guter Durchmischung zudosiert. Durch Zugabe von 720 g Wasser wird die Säurekonzentration auf ein unreaktives Maß reduziert, sodass nach sorgfältiger Durchmischung und anschließendem 30 minütigen Ruhen lassen die toluolische Harzphase von der wässrig/ethanolischen Chlorwasserstoffphase getrennt werden kann, ohne dass weitere Kondensationsschritte stattfinden.

In weiteren Aufarbeitungsschritten wird die toluolische Harzphase mit Natriumbicarbonat neutralisiert, mit Aktivkohle von katalytisch wirksamen Metallspuren befreit und anschließend über Filterhilfsmittel filtriert und am Rotationsverdampfer bei 120-200°C und 30 mbar Vakuum von flüchtigen Bestandteilen befreit, wobei Ethanol und Toluol wieder dem Prozess rückgeführt werden können.

Es werden 171 g eines Siloxans der mittleren Summenformel

[MeSiO_{3/2}]_{15,2}[Me₂SiO]_{2,6}[Me₃SiO_{1/2}]_{0,9}[IOSiO_{3/2}]_{0,8}[EtO_{1/2}]_{2,0}[HO_{1/2}]_{0,3}

als klare und farblose Flüssigkeit mit einer Viskosität von 2501 mPas erhalten, wobei Me gleich Methylrest, IO gleich Isooctylrest und Et gleich Ethylrest bedeutet.

### Beispiel 3

In einen Loopreaktor mit einem Innenvolumen von 2 1 mit Naturumlauf wird ein Gemisch aus 1,2 1/h Methyltrichlorsilan, 0,16 1/h Dimethyldichlorsilan und 0,17 1/h Trimethyltrichlorsilan und ein Gemisch aus 1,54 1/h Ethanol und 0,08 1/h Wasser kontinuierlich zudosiert, wobei sich eine Reaktionstemperatur von 30 bis 34°C und eine mittlere Verweilzeit von 48 Minuten einstellt.

2,42 1/h des so hergestellten Teilalkoxylates/Teilhydrolysates werden kontinuierlich in einen zweiten Loopreaktor mit einem Innenvolumen von 6 1 saugseitig vor der Kreiselpumpe mit einer Förderleistung von 1m³/h überführt. Des Weiteren werden kontinuierlich 3,2 1/h Toluol und 0,47 1/h Wasser saugseitig vor der Kreiselpumpe zudosiert (Verweilzeit: 70 Minuten, Temperatur i. d. Hydrolyse/Kondensationsloop: 40°C).

6,1 1/h des Hydrolysates/Kondensates werden kontinuierlich aus der zweiten Reaktionsloop gefördert. In diese Leitung werden 2,85 1/h Wasser zudosiert, wobei das Gemisch über einen Statikmischer gut durchmischt wird.

In einem Phasentrennbehälter mit einem Innenvolumen von 12 1 werden 9 l/h des Reaktionsgemisches kontinuierlich eindosiert und die obere von der unteren Phase getrennt. Die weitere Aufarbeitung erfolgt wie in den Beispielen 1 und 2 beschrieben. Ethanol und Toluol können nach Redestillation wieder dem Prozess rückgeführt werden.

Es werden 0,85 l/h eines Siloxans der Summenformel

[MeSiO_{3/2}]_{15,3} [Me₂SiO]_{2,8} [Me₃SiO_{1/2}]_{1,3} [EtO_{1/2}]_{1,5} [HO_{1/2}]_{1,0}

als farblose Flüssigkeit mit einer Viskosität von 2500 cst erhalten.

## Patentansprüche

1. Organopolysiloxane aus Einheiten der allgemeinen Formel
RₐX_{b}SiO_{(4-a-b)/2} (I),
wobei
R gleich oder verschieden sein kann und einwertige, SiC-gebundene, gegebenenfalls substituierte Kohlenwasserstoffreste bedeutet,
X gleich oder verschieden sein kann und Halogenatom oder einen Rest -OR¹ bedeutet mit R¹ gleich Wasserstoffatom oder gegebenenfalls substituierten Kohlenwasserstoffrest,
a 0, 1, 2 oder 3 ist und
b 0, 1, 2 oder 3 ist,
mit der Maßgabe, dass die Summe a+b ≤ 3 ist, in mindestens 50 % der Einheiten des Organopolysiloxans a gleich 1 ist und die Organopolysiloxane bei 20°C und einem Druck von 900 bis 1100 hPa flüssig sind.

2. Organopolysiloxane gemäß Anspruch 1, **dadurch gekennzeichnet, dass** es sich bei Rest X um Reste -OR¹ mit R¹ gleich der genannten Bedeutung handelt.

3. Organopolysiloxane gemäß Anspruch 1 oder 2, **dadurch gekennzeichnet, dass** es sich um solche handelt, in denen in mindestens 60 % aller Einheiten der Formel (I) a gleich 1 ist und in maximal 30 % aller Einheiten der Formel (I) a gleich 2 oder 3 ist.

4. Organopolysiloxane gemäß einem oder mehreren der Ansprüche 1 bis 3, **dadurch gekennzeichnet, dass** es sich um solche handelt, in denen in mindestens 65 % aller Einheiten der Formel (I) a gleich 1 ist und in maximal 25 % aller Einheiten der Formel (I) a gleich 2 oder 3 ist.

5. Organopolysiloxane gemäß einem oder mehreren der Ansprüche 1 bis 4, **dadurch gekennzeichnet, dass** es sich um solche handelt, in denen mindestens 60 % aller Einheiten der Formel (I) solche sind mit b gleich 0.

6. Organopolysiloxane gemäß einem oder mehreren der Ansprüche 1 bis 5, **dadurch gekennzeichnet, dass** sie bei 25°C eine Viskosität von 1 bis 500 000 mm²/s aufweisen.

7. Organopolysiloxane gemäß einem oder mehreren der Ansprüche 1 bis 6, **dadurch gekennzeichnet, dass** sie bei 25°C eine Viskosität von 1 bis 50 000 mm²/s haben.
